# EUROPÄISCHE PATENTANMELDUNG

(11) **EP 0 941 978 A1**
(43) Veröffentlichungstag der Anmeldung: **15.09.1999**
(21) Anmeldenummer: 99104676.4
(22) Anmeldetag: 09.03.1999
(51) Int. Cl.: C04B 41/85

(54) **Keramisches Besteckteil sowie Verfahren zu dessen Herstellung**

(30) Priorität: 09.03.1998 DE 19811195
(71) Anmelder: Sternplastik Hellstern GmbH & Co. KG, 78054 Villingen-Schwenningen (DE)
(72) Erfinder: Hellstern, Peter, 78054 Villingen-Schwenningen (DE)
(74) Vertreter: Patentanwälte Westphal, Mussgnug & Partner

(57) **Zusammenfassung**

Dichtgesintertes Besteckteil, das aus einer Hochleistungsoxidkeramik im Spritzgießverfahren hergestellt ist und ein Dekor auf der Basis von Metalloxid aufweist, das bei einer Temperatur im Bereich zwischen 600° C und 1700° C eingebrannt ist; sowie Verfahren zu dessen Herstellung. Derartige Besteckteile besitzen eine hochwertige Anmutung, die sie von herkömmlichen Besteckteilen augenfällig unterscheidet.

## Beschreibung

Die Erfindung betrifft ein Besteckteil gemäß Oberbegriff des Anspruchs 1 sowie ein Verfahren zum Herstellen eines Besteckteils gemäß Oberbegriff des Anspruchs 7.

Besteckteile in Form einer keramischen Klinge eines Schneidwerkzeugs sind beispielsweise aus der DE 196 18 803 A1 bekannt, von der die Erfindung ausgeht. Derartige Klingen sind mittlerweile im Handel erhältlich und haben sich speziell bei professionellen Anwendern einen hervorragenden Ruf erworben. Der Grund liegt hauptsächlich darin, daß sie eine extrem hohe Verschleißfestigkeit besitzen und ein Nachschleifen oder Nachschärfen bei sachgerechter Handhabung nicht erforderlich ist. Darüber hinaus sind derartige Klingen geruchsneutral und - anders als herkömmliche Klingen aus Stahl - antiallergisch.

Als Ausgangswerkstoff wird eine sogenannte Hochleistungskeramik verwendet, die gemäß einschlägiger Normen definiert ist als hochentwickelter, hochleistungsfähiger keramischer Werkstoff, der überwiegend nichtmetallisch und anorganisch ist, und über bestimmte zweckmäßige Eigenschaften verfügt. Es findet damit eine Abgrenzung zur konventionellen Keramik statt. Von besonderer Bedeutung im Zusammenhang mit den gattungsgemäßen Besteckteilen ist die Gruppe der Oxidkeramikwerkstoffe, zu denen u.a. Aluminiumoxid (Al₂O₃), Magnesiumoxid (MgO), Zirkonoxid (ZrO₂), Aluminiumtitanat (AlTi) sowie Piezokeramik (PZT) zählen.

Für besonders hohe mechanische Beanspruchungen eignen sich hieraus hergestelle Besteckteile, sofern sie dicht gesintert sind, d. h. eine Dichte aufweisen, die größer ist als 95 % der theoretischen Dichte des Ausgangsmaterials. Damit läßt sich eine praktisch vollständig porenfreie Oberfläche erzielen.

Trotz der von der Fachwelt unbestrittenen Vorteile konnten sich keramische Klingen bzw. hieraus aufgebaute keramische Messer noch nicht auf breiter Front, insbesondere nicht in Privathaushalten durchsetzen. Der Grund dürfte u.a. darin liegen, daß die keramischen Klingen bzw. die mit solchen Klingen bestückten Besteckteile ein wenig attraktives Aussehen besitzen. Aufgrund der verwendeten Werkstoffe in Verbindung mit dem Sintervorgang bei der Herstellung ergibt sich eine durchgehend weiße, glatte Oberfläche, die auf den ersten Blick billigen Kunststoffmessern zum Verwechseln ähnlich sieht. Diese Assoziation mit Einwegbesteck mag als einer der Hauptgründe für die verhaltene Akzeptanz bei den Käufern gelten.

Der vorliegenden Erfindung lag daher das Problem zugrunde, ein keramisches Besteckteil der eingangs genannten Art sowie ein Verfahren zu dessen Herstellung anzugeben, bei dem die geschilderten Nachteile nicht mehr auftreten. Speziell sollte das optische Erscheinungsbild soweit verbessert werden, daß der Abstand zu den vorerwähnten Kunststoffbestecken weiter vergrößert wird, und potentielle Kunden auch bei flüchtiger Betrachtung sofort erkennen, daß es sich bei dem Besteckteil um ein qualitativ hochwertiges Produkt handelt.

Dieses Problem wird mit einem Besteckteil gelöst, das die Merkmale des Anspruchs 1 aufweist. Vorteilhafte Ausgestaltungsformen der Erfindung sind durch die Merkmale der hierauf rückbezogenen Ansprüche angegeben.

Das Problem wird weiterhin mit einem Verfahren gelöst, das durch die Merkmale des Anspruchs 7 definiert ist. Vorteilhafte Verfahrensvarianten sind durch die nachgeordneten Ansprüche beschrieben.

Die Erfindung basiert auf der Idee, das Besteckteil mit einem Dekor auf der Basis von Metalloxid zu versehen, welches durch Einbrennen dauerhaft aufgebracht ist und deshalb ohne Glasur auskommt. Damit entsteht ein Besteckteil, das hinsichtlich seiner Anmutung völlig neue Wege beschreitet. Unter Beibehaltung der anerkannten, eingangs erwähnten Gebrauchseigenschaften, insbesondere der Verschleißfestigkeit, wird eine optische Wirkung erzielt, die unmittelbar die Hochwertigkeit des Produkts erkennen und eine gedankliche Verbindung zu Kunststoffbesteckteilen erst gar nicht aufkommen läßt.

Verzierungstechniken sind dem Grunde nach aus der Porzellanindustrie bekannt, wo eine Reihe unterschiedlichster Techniken zum Einsatz kommt, um Geschirrteile und andere Haushaltsartikel optisch aufzuwerten. Trotz dieser bestens etablierten Technologie sind bislang keinerlei Ansatzpunkte erkennbar geworden, keramische Besteckteile in vergleichbarer Art und Weise zu dekorieren. Die Ursache hierfür dürfte u. a. darin liegen, daß die in der Porzellanindustrie üblichen Dekore regelmäßig mit einer Glasur versehen sind, welche für stark beanspruchte Teile, wie z. B. Klingen von Messern, wegen mangelnder Abriebfestigkeit ungeeignet ist.

Auch die Anwendung anderer etablierter Färbetechniken beispielsweise zur Dekoration von Fliesen, bei denen Färbelösungen in die poröse Oberfläche eindringen und die keine Glasur aufweisen, sind für den vorliegenden Anwendungsfall ungeeignet. Die hier in Rede stehenden Besteckteile besitzen aufgrund der verwendeten Ausgangswerkstoffe eine inerte und praktisch porenfreie Oberfläche, auf der solche Farblösungen nicht haften. Ein dauerhafter Farbauftrag ist daher nicht möglich.

Bevorzugt werden als Metalloxide insbesondere Eisen-, Kupfer-, Mangan-, Kobalt- oder Chromoxid eingesetzt, die auch im Falle stark beanspruchter Oberflächen, wie beispielsweise bei Klingen eines Schneidwerkzeugs, eine hervorragende Abriebfestigkeit besitzen.

Für Besteckteile des täglichen Gebrauchs ist es wünschenswert und meist auch erforderlich, daß das Dekor spülmaschinenfest ist. Damit ist gewährleistet, daß auch in genormten Testverfahren keinerlei Cytotoxizität freigesetzt wird.

Besonders gute Abriebeigenschaften des Dekors sind dann gegeben, wenn es mit einer Temperatur im Bereich zwischen 1.300°C und 1.700°C eingebrannt ist.

In der Praxis hat es sich als vorteilhaft erwiesen, wenn das Dekor bzw. der Farbauftrag so gewählt wird, daß beim Endprodukt eine Einbrenntiefe von bis zu 0,5mm, vorzugsweise von 0,01 bis 0,3mm, erzielt wird.

Die Besteckteile können aufgrund des Herstellverfahrens im Spritzguß an sich beliebige Formen annehmen. Besondere Vorteile ergeben sich bei Besteckteilen in Form einer Klinge eines Schneidwerkzeugs, da hierbei in besonderem Maße die Härte des Materials zum Tragen kommt. Dabei ist es möglich, das Besteckteil einschließlich des Griffs einstückig zu Spritzen oder aber den Griff nachträglich anzubringen, beispielsweise anzuspritzen oder in anderer Art und Weise zu befestigen. Hierbei ist es auch möglich, für den Griff ein anderes Material zu wählen, um beispielsweise besonders edle Materialpaarungen zusammenzustellen.

Weiterhin ist es möglich, Besteckteile in Form von Löffeln oder Gabeln herzustellen, um eine vollständige Besteckserie zu gestalten. Eine derartige Besteckserie erlaubt völlig neue Wege in der Tischdekoration, da sämtliche Besteckteile eines Gedecks beispielsweise auf das Dekor des Geschirrs und/oder der Tischwäsche abgestimmt werden können. Darüber hinaus ergibt sich ein völlig neues Griffgefühl bei solchen Besteckteilen, bei denen auch der Griffbereich aus keramischem Material besteht. Temperatureinflüsse, wie sie bei herkömmlichen Besteckteilen aus Metall auftreten, sind nicht zu beobachten.

Ein weiterer Aspekt der Erfindung zielt auf die Bereitstellung eines Verfahrens zum Herstellen eines Besteckteils ab, bei dem eine dichtgesinterte Hochleistungsoxidkeramik im Spritzgieß-Verfahren, insbesondere im Pulver-Spritzgießverfahren, zum Grünling geformt und anschließend dichtgesintert wird. Erfindungsgemäß wird danach ein Dekor auf der Basis von Metalloxid aufgebracht und anschließend bei einer Temperatur im Bereich zwischen 600°C und 1.700°C gesintert. Durch diese einfache Maßnahme gelingt es, den gewünschten optischen Effekt zu erzielen, ohne die Eigenschaften des fertigen Produkts nachteilig zu beeinflussen. Eine besonders haltbare Anbringung des Dekors gelingt dann, wenn beim Brennen eine Temperatur zwischen 1.300°C und 1.700°C gewählt wird.

Als Metalloxide eignen sich besonders Eisen-, Kupfer-, Mangan-, Kobalt- oder Chormoxid. Bei der Auswahl ist lediglich darauf zu achten, daß die maximale Brenntemperatur hierauf abgestimmt ist.

Zum Aufbringen des Dekors stehen eine Reihe etablierter Verfahren zur Verfügung.

Bei Motiven, Ornamenten und vergleichbaren Dekorationen haben sich verschiedene Druckverfahren bewährt. Neben dem auch aus anderen Anwendungsbereichen bekannten Siebdruckverfahren sind speziell das Schiebedruck-, Tamponübertragungs- und Schwammdekorationsverfahren zu erwähnen. Beim Schiebedruckverfahren befindet sich das Motiv auf einer Trägerfolie, welche auf das Besteckteil aufgeschoben wird. Beim Einbrennen wird die Trägerfolie aufgelöst, und deren Bestandteile werden ausgetrieben. Das Motiv wird in die Oberfläche dauerhaft eingebrannt.

Beim Tamponübertragungsverfahren, auch Tampon-Print genannt, wird das Motiv mit einem Moosgummi aufgedruckt. Auf einem vergleichbaren Prinzip beruht das Schwammdekorationsverfahren, bei dem Farbe mittels eines Schwamms übertragen wird.

Die Dekore können aber auch maschinell oder von Hand aufgespritzt werden, wodurch sich ein äußerst gleichmäßiger Farbauftrag erzielen läßt. Hinsichtlich der Gestaltung des Motivs sind hierbei kaum Grenzen gesetzt, so daß auch individuelle Motive realisierbar sind. Beispielsweise ist es denkbar, Initialen oder den vollständigen Namenszug einer Person auf diese Weise aufzubringen.

Ebenso ist es möglich, das Dekor von Hand mittels eines Pinsels aufzutragen.

Ein optisch ganz besonders interessanter Effekt läßt sich erzielen, wenn der Grünling unter Vakuum oder Inertgas gesintert wird. Das auf diese Weise hergestellte Besteckteil erhält ein glasklares Aussehen, das in Verbindung mit dem Dekor eine völlig neue Art von Besteck ermöglicht. Solche Besteckteile harmonieren in besonderem Maße mit den Trinkgläsern einer Tischdekoration und verleihen dem Gesamtarrangement eine ungewohnte Leichtigkeit.

Schließlich kann die Bereitstellung einer breiten Farbpalette, besonders auf der Basis der vorstehend beschriebenen Metalloxide, dadurch erreicht werden, daß das Einbrennen unter Vakuum, Inertgas, oxidierender oder reduzierender Atmosphäre vorgenommen wird. Die entsprechende Einstellung der Atmosphäre ergibt eine reporduzierbare Farbtönung, wie dies bei der Herstellung von Besteckserien unerläßlich ist.

Die vorstehend beschriebene Erfindung eignet sich im besonderen Maße zur designorientierten Bereitstellung von kompletten Bestecksätzen, wobei sämtliche Besteckteile ein durchgängig einheitliches Dekor aufweisen können. Es versteht sich von selbst, daß die Besteckteile einschließlich des Griffabschnitts einstückig aus der beschriebenen Hochleistungskeramik gefertigt oder aber mit separaten Griffteilen, auch eines anderen Werkstoffs, versehen sein können.

Die Erfindung wird abschließend anhand eines konkreten Beispiels beschrieben, bei dem die Klinge eines Messers mit einem Dekor versehen wurde.

Als Ausgangsmaterial diente eine sogenannte Mischkeramik, die im wesentlichen aus den Bestandteilen Aluminiumoxid (Al₂O₃) und Zirkonoxid (ZrO₂) besteht. Das Ausgangsmaterial wurde im Pulver-Spritzgießverfahren (CIM = Ceramic Injection Molding) zum Grünling geformt und anschließend bei einer Temperatur, die bei ca. 1550° C bis 1750° C lag, dicht gesintert. Die so entstandene Klinge wies eine Dichte auf, die größer als 95 % der theoretischen Dichte betrug und eine inerte und praktisch porenfreie Oberfläche aufwies. Danach wurde Kobaltoxid in Wasser eingerührt und mit einem Pinsel auf der Oberfläche in Form eines Quadrats aufgetragen und anschließend bei einer Temperatur von ca. 1400° C eingebrannt.

Nach dem Brennvorgang ergab sich eine tiefblaue Färbung des mit Farbauftrag versehenen quadratischen Bereichs mit randscharfen Konturen. Es wurde eine Einbrenntiefe von ca. 5 µm erreicht.

Zur Überprüfung der Verschleißfestigkeit wurde die Klinge im Bereich des Farbauftrags mit einer Diamantpolierpaste überschliffen, wobei die tiefblaue Farbe dauerhaft erhalten blieb. Ein abschließender genormter Test belegte, daß keinerlei Cytotoxizität von der Klinge ausgeht.

## Patentansprüche

1. Dichtgesintertes Besteckteil, das aus einer Hochleistungsoxidkeramik im Spritzgießverfahren hergestellt ist, gekennzeichnet durch ein Dekor auf der Basis von Metalloxid, das bei einer Temperatur im Bereich zwischen 600° C und 1700° C eingebrannt ist.

2. Besteckteil nach Anspruch 1, dadurch gekennzeichnet, daß das Metalloxid ein Eisen-, Kupfer-, Mangan-, Kobalt- oder Chromoxid ist.

3. Besteckteil nach Anspruch 1 oder 2, dadurch gekennzeichnet, daß das Dekor spülmaschinenfest ist.

4. Besteckteil nach einem der vorstehenden Ansprüche, dadurch gekennzeichnet, daß das Dekor bei einer Temperatur im Bereich zwischen 1.300°C und 1.700°C eingebrannt ist.

5. Besteckteil nach einem der vorstehenden Ansprüche, dadurch gekennzeichnet, daß das Dekor eine Einbrenntiefe von bis zu 0,5mm, vorzugsweise im Bereich zwischen 0,01 und 0,3mm aufweist.

6. Besteckteil nach einem der vorstehenden Ansprüche in Form einer Klinge eines Schneidwerkzeugs.

7. Verfahren zum Herstellen eines Besteckteils, bei dem eine Hochleistungsoxidkeramik im Spritzgießverfahren zum Grünling geformt und anschließend dichtgesintert wird, dadurch gekennzeichnet, daß ein Dekor auf der Basis von Metalloxid aufgebracht und bei einer Temperatur im Bereich zwischen 600°C und 1.700°C eingebrannt wird.

8. Verfahren nach Anspruch 7, dadurch gekennzeichnet, daß das Dekor bei einer Temperatur im Bereich zwischen 1.300°C und 1.700°C eingebrannt wird.

9. Verfahren nach einem der Ansprüche 7 oder 8, dadurch gekennzeichnet, daß als Metalloxid Eisen-, Kupfer-, Mangan-, Kobalt- oder Chromoxid, verwendet wird.

10. Verfahren nach einem der Ansprüche 7 bis 9, dadurch gekennzeichnet, daß das Dekor im Schiebedruck-, Siebdruck-, Tamponübertragungs- oder Schwammdekorationsverfahren aufgebracht wird.

11. Verfahren nach einem der Ansprüche 7 bis 9, dadurch gekennzeichnet, daß das Dekor maschinell und/oder von Hand aufgespritzt wird.

12. Verfahren nach einem der Ansprüche 7 bis 9, dadurch gekennzeichnet, daß das Dekor von Hand mechanisch aufgetragen wird.

13. Verfahren nach einem der Ansprüche 7 bis 12, dadurch gekennzeichnet, daß der Grünling unter Vakuum oder Inertgas gesintert wird.

14. Verfahren nach einem der Ansprüche 7 bis 13, dadurch gekennzeichnet, daß das Dekor unter Vakuum, Inertgas, oxidierender oder reduzierender Atmosphäre eingebrannt wird.
